(19) Europäisches Patentamt / European Patent Office / Office européen des brevets

(11) **EP 3 223 038 B1**

(12) **FASCICULE DE BREVET EUROPEEN**

(45) Date de publication et mention
de la délivrance du brevet:
**29.08.2018 Bulletin 2018/35**

(51) Int Cl.:
***G01S 19/40*** *(2010.01)* ***G01S 19/32*** *(2010.01)*

(21) Numéro de dépôt: **17158918.7**

(22) Date de dépôt: **02.03.2017**

(54) **PROCÉDÉ DE GEOPOSITIONNEMENT PAR SATELLITES ET TERMINAL ASSOCIÉ**

SATELLITENBASIERTES GEOPOSITIONIERUNGSVERFAHREN UND DAS ENTSPRECHENDE ENDGERÄT

SATELLITE GEOPOSITIONING METHOD AND ASSOCIATED TERMINAL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.03.2016 FR 1600503**

(43) Date de publication de la demande:
**27.09.2017 Bulletin 2017/39**

(73) Titulaire: **Thales**
**92400 Courbevoie (FR)**

(72) Inventeurs:
• **MARTIN, Nicolas**
**26500 Bourg Les Valence (FR)**
• **BOUVET, Denis**
**26000 Valence (FR)**
• **GUICHON, Hervé**
**07500 Guilherand-Granges (FR)**

(74) Mandataire: **Brunelli, Gérald**
**Marks & Clerk France**
**Immeuble Visium**
**22, avenue Aristide Briand**
**94117 Arcueil Cedex (FR)**

(56) Documents cités:
**US-A1- 2011 205 116**

• **MARTIN NICOLAS ET AL: "RAIM with Kalman Code Carrier Smoothing", GNSS 2012 - PROCEEDINGS OF THE 25TH INTERNATIONAL TECHNICAL MEETING OF THE SATELLITE DIVISION OF THE INSTITUTE OF NAVIGATION (ION GNSS 2012), THE INSTITUTE OF NAVIGATION, 8551 RIXLEW LANE SUITE 360 MANASSAS, VA 20109, USA, 21 septembre 2012 (2012-09-21), pages 2259-2274, XP056008523,**
• **HWANG PATRICK Y ET AL: "ENHANCED DIFFERENTIAL GPS CARRIER-SMOOTHED CODE PROCESSING USING DUAL- FREQUENCY MEASUREMENTS", NAVIGATION, INSTITUTE OF NAVIGATION, FAIRFAX, VA, US, vol. 46, no. 2, 1 septembre 1999 (1999-09-01), pages 127-138, XP056013314, ISSN: 0028-1522**

## Description

La présente invention concerne le domaine du positionnement par satellites. L'invention concerne plus particulièrement un procédé de géopositionnement par satellites et un terminal associé.

Un système de positionnement par satellites (ou GNSS pour « *Global Navigation Satellite System* » selon la terminologie anglosaxonne) utilise une constellation de satellites qui tournent autour de la Terre sur des orbites très précisément déterminées, c'est à dire pour lesquels il est possible de connaître à tout instant la position. Les orbites des satellites sont choisies de sorte qu'à toute heure, six à douze satellites soient visibles en tout point de la Terre. Chaque satellite, dit bi-fréquences, émet des signaux électromagnétiques de géopositionnement sur deux fréquences différentes (par exemple, $L_1$=1 575,42 MHz et $L_2$=1 227,6 MHz pour le système GPS et $L_1$=1 575,42 MHz et $E_5$=1 227,6 MHz pour le système GALILEO).

Un récepteur GNSS reçoit les signaux émis par des satellites visibles et mesure la durée de propagation requise pour qu'une marque horaire transmise par un satellite lui parvienne. Les marques horaires sont codées sur des ondes porteuses par la technique de modulation de phase. Chaque satellite transmet ainsi un code pseudo-aléatoire qui lui est propre. Une réplique de la séquence du code est générée par le récepteur et le décalage que doit subir la réplique afin de coïncider avec le code reçu correspond à la durée de propagation du signal pour parcourir la distance satellite-récepteur. Cette durée multipliée par la vitesse de la lumière dans le milieu traversé donne une mesure de distance appelée pseudo-distance. A partir des mesures des pseudo-distances le séparant de chaque satellite visible, et de la connaissance de la position des satellites, le récepteur déduit sa position précise en latitude, longitude, et en altitude dans un repère terrestre par une résolution numérique voisine de la triangulation. Il peut également en déduire la date et l'heure précise dans le repère temporel du système GNSS.

La référence de temps du récepteur, fournie par son horloge, ne coïncide pas parfaitement avec la référence de temps des satellites de la constellation, ce qui induit un biais dans les mesures de temps de propagation, donc de distance, égal au retard de la référence de temps du récepteur par rapport à la référence de temps des satellites. On emploie pour cela le terme de " pseudo-distance ". Le biais de temps, commun à toutes les mesures, constitue une quatrième inconnue, outre les trois inconnues de position, ce qui oblige à disposer d'au moins quatre mesures pour calculer la position.

En outre, la position du terminal de réception est estimée en faisant un certain nombre d'approximations. La mesure de la pseudo-distance ne peut pas par exemple, s'affranchir des erreurs liées au système telles que le manque de précision des éphémérides ou des horloges embarquées dans les satellites. La mesure de la pseudo-distance est également entachée d'erreurs liées aux interactions entre les signaux et les couches d'atmosphère (troposphère et ionosphère) qu'ils traversent. Le retard de propagation du signal dans la troposphère et l'ionosphère dépend de l'inclinaison du trajet et de l'heure à laquelle il a lieu. Typiquement, les erreurs de positionnement du GNSS liées à l'atmosphère sont plus marquées de jour que de nuit et plus sensibles lorsqu'un satellite est proche de l'horizon qu'au zénith. Dans certaines applications, comme l'approche de précision en aéronautique, la précision de positionnement obtenue par une mesure directe ou absolue de la pseudo-distance n'est pas suffisante.

L'utilisation d'une mesure différentielle permet d'améliorer sensiblement la précision du positionnement. Elle consiste à transmettre par un canal dédié (VHF, UHF ou téléphonie cellulaire) des corrections des mesures de pseudo-distance élaborées à partir de mesures de pseudo-distances provenant de récepteurs disposés dans des stations au sol et dont les positions sont connues très précisément et proches du récepteur embarqué. La mesure de la pseudo-distance séparant un récepteur au sol et un satellite est comparée à la distance théorique séparant ces deux dispositifs. La distance théorique est calculée à partir des coordonnées spatiales respectives du récepteur au sol et du satellite qui sont connues à tout instant. La différence entre la mesure de distance et la distance théorique représente l'erreur de mesure, elle est calculée pour chaque satellite à chaque époque d'observation. Ces différences de distances constituent des termes correctifs (aussi appelés corrections différentielles) qui sont retranchés aux mesures de pseudo-distance réalisées par le récepteur mobile. Ces corrections ont pour effet de supprimer pratiquement totalement les erreurs qui présentent une corrélation spatiale importante quelle que soit leur origine, système ou atmosphérique. Les corrections sont d'autant plus efficaces que les deux récepteurs sont proches. Toutefois, la mesure différentielle n'élimine pas les erreurs liées aux réflexions du signal sur des objets proches de l'antenne du récepteur, ni les erreurs propres au récepteur (bruit thermique). Ces erreurs sont présentes sur le récepteur de référence ainsi que sur le récepteur embarqué, elles dégradent la mesure de positionnement lors de la correction différentielle ; la précision obtenue est de l'ordre de quelques mètres.

Pour améliorer la précision du positionnement, les récepteurs au sol et les récepteurs mobiles, embarqués sur des porteurs, peuvent aussi tirer profit d'une seconde information élaborée par le récepteur qui est la mesure de la phase de la porteuse, pour chaque signal satellite reçu. La mesure de la phase instantanée de la porteuse reçue permet en effet de calculer une pseudo-distance, dite pseudo-distance de porteuse, entre le récepteur et le satellite, au même titre que la mesure de la phase instantanée du code pseudo-aléatoire. Cette pseudo-distance de porteuse subit les mêmes variations que la pseudo-distance de code, lorsque la distance entre le récepteur et le satellite ou le biais de temps dû à l'horloge du récepteur varient. Cette pseudo-distance mesurée par la phase est a priori ambigüe puisque la phase est connue modulo $2\pi$ mais elle est beaucoup moins bruitée que les mesures de pseudo-distance de code.

Une solution connue pour améliorer les mesures de pseudo-distance consiste à lisser la mesure de pseudo-distance bruitée réalisée sur le code par les mesures de phase peu bruitées. Pour cela, le récepteur applique un filtre passe-bas, généralement du premier ordre, à la différence entre les mesures de pseudo-distance de code et de pseudo-distance de porteuse, puis ajoute cette différence filtrée à la mesure de pseudo-distance de porteuse pour reconstituer la mesure de phase de code. Ce traitement est réalisé axe satellite par axe satellite. Si la mesure est différentielle, un lissage identique est appliqué sur les récepteurs de la station sol afin que l'erreur de traînage du filtre passe bas, due à la divergence entre le code et la porteuse liée aux fluctuations du retard ionosphérique, soit identique au sol et sur le récepteur mobile, et ne perturbe pas la mesure de positionnement après de l'application de la correction.

Le principal intérêt de la méthode de lissage axe par axe tient dans sa simplicité et dans l'absence d'effet de couplage entre les mesures des pseudo-distances des différents satellites ou canaux, néanmoins elle n'est pas complètement satisfaisante. En effet, le gain sur la précision de la mesure est significatif uniquement lorsque le lissage est effectué avec une constante de temps longue ; et dans ce cas, la durée de réinitialisation pour récupérer la précision après une modification brusque de l'ensemble des mesures disponibles, est également longue, par exemple lors de la disparition d'un satellite par masquage, d'une panne d'un satellite ou encore d'une panne d'un récepteur au sol dans le cas du GNSS différentiel.

En présence de scintillation ionosphérique, notamment près de l'équateur, les mesures de phase de porteuse sur les signaux émis par les satellites présentent des discontinuités. En effet, dans l'ionosphère, le rayonnement solaire provoque une ionisation partielle des atomes et molécules de gaz. On se trouve donc en présence de particules chargées (ions et électrons libres) qui sont susceptibles d'interagir avec une onde électromagnétique incidente et d'influer sur sa propagation. La scintillation ionosphérique se manifeste sous forme d'événements plus ou moins localisés, d'une durée typique de quelques heures et affectant les liaisons Terre-satellites. Durant un évènement de scintillation, en raison de la présence de particules ionisées dans l'ionosphère, le signal reçu sur Terre, présente des fluctuations d'amplitude et de phase susceptibles de perturber fortement la liaison et de compromettre son exploitation. Du fait des fluctuations sur l'amplitude des signaux reçus par le terminal de géopositionnement, les boucles de poursuite qui assurent la démodulation du signal décrochent lorsque l'amplitude est trop faible. Ainsi, le terminal ne peut plus se baser sur la continuité de la phase pour effectuer le lissage code porteuse. A chaque fois que la boucle décroche le filtre de lissage code porteuse doit être réinitialisé et on doit attendre que ce filtre converge de nouveau. A titre d'exemple, il faut attendre au moins une seconde pour ré-accrocher le signal et retrouver une mesure de pseudo-distance valide. Ces scintillations ionosphériques entrainent donc une dégradation régulière de la précision.

Dans le cas d'un récepteur standard ce phénomène peut ne pas être gênant car les satellites de géopositionnement ne décrochent pas tous en même temps, et si les durées de décrochage sont courtes, le récepteur dispose toujours d'au moins quatre mesures disponibles.

Dans le cas d'un récepteur aéronautique chaque décrochage est problématique car il faut réinitialiser le filtre de lissage code porteuse et attendre que le filtre converge de nouveau. Pendant ce temps de convergence, qui est typiquement d'environ cent secondes, la mesure satellite n'est pas disponible pour calculer le point, ou très dégradée. Sachant que la durée moyenne entre deux décrochages est de dix secondes, on se retrouve avec des mesures satellites toujours indisponibles. Avec les récepteurs aéronautiques actuels le positionnement devient indisponible en présence de fortes scintillations ionosphériques.

Il est connu dans l'art antérieur des récepteurs conçus pour résister à la scintillation ionosphérique grâce à des bandes de boucle de poursuite étroites. Cela fonctionne pour des récepteurs fixes, avec des horloges stables, mais pas pour des récepteurs aéronautiques.

Il est également connu le document "RAIM with Kalman Code Carrier Smoothing", GNSS 2012, PROCEEDINGS OF THE 25TH INTERNATIONAL TECHNICAL MEETING OF THE SATELLITE DIVISION OF THE INSTITUTE OF NAVIGATION (ION GNSS 2012), p2265-2269.

Un but de l'invention est notamment de corriger tout ou partie des inconvénients de l'art antérieur en proposant une solution permettant à un récepteur de géopositionnement d'assurer la continuité de son positionnement même en présence de scintillation ionosphérique.

A cet effet, l'invention a pour objet un procédé de géopositionnement par satellites mis en oeuvre par un terminal de géopositionnement à partir d'au moins quatre satellites émettant chacun des signaux électromagnétiques de géopositionnement, dit bi-fréquences, sur deux fréquences différentes, chacun desdits signaux étant formés d'une fréquence porteuse modulée par un code d'étalement, ledit terminal comprenant au moins un module de réception configuré pour recevoir les signaux électromagnétiques provenant de chaque satellite sur deux fréquences différentes et au moins un module de calcul configuré pour traiter lesdits signaux, ledit procédé comprenant, pour chaque satellite de géopositionnement,

- une étape de calcul, en régime nominal, de quatre pseudo-distances à partir des deux codes et des deux porteuses des signaux de géopositionnement bi-fréquences reçus,

- une étape de correction des retards ionosphériques sur chaque pseudo-distance calculée en appliquant un modèle de propagation de l'erreur ionosphérique,
- une étape de lissage code porteuse à l'aide d'un filtre de Kalman dont le vecteur de mesure comprend les quatre pseudo-distances corrigées afin de fournir une seule mesure de pseudo-distance sans bruit de mesure et de corriger le résidu d'erreur ionosphérique,

la position du terminal de géopositionnement étant estimée en utilisant les pseudo-distances corrigées calculées pour chaque satellite.

Selon un mode de mise en oeuvre, le procédé comprend une étape de correction des retards troposphériques.

Selon un mode de mise en oeuvre, le procédé comprend une étape de correction des erreurs système.

Selon un mode de mise en oeuvre, le procédé comprend une étape de compensation d'un biais inter-fréquences entre les signaux bi-fréquences.

Selon un mode de mise en oeuvre, le filtre de Kalman est configuré pour propager un vecteur d'état comprenant la valeur de la pseudo-distance sans bruit de mesure, la valeur de l'erreur ionosphérique sur une fréquence après correction par le modèle de propagation de l'erreur ionosphérique et les valeurs des l'ambiguïtés flottantes des mesures de phase de porteuse sur chacune des deux fréquences.

Selon un mode de mise en oeuvre, le filtre de Kalman est configuré pour propager un vecteur d'état comprenant en outre la valeur du biais inter-fréquences entre les signaux bi-fréquences.

Selon un mode de mise en oeuvre, le modèle de propagation de l'erreur ionosphérique est un modèle de Kobuchar.

Selon un mode de mise en oeuvre, le modèle de propagation de l'erreur ionosphérique est un modèle de Nequick.

Selon un mode de mise en oeuvre, le procédé comprend une étape de mémorisation de l'erreur ionosphérique.

L'invention a également pour objet un terminal de géopositionnement par satellites comprenant au moins un module de réception configuré pour recevoir des signaux électromagnétiques de géopositionnement, dit bi-fréquences, émis par au moins quatre satellites sur deux fréquences différentes et au moins un module de calcul configuré pour traiter lesdits signaux de géopositionnement et mettre en oeuvre le procédé de géopositionnement précédemment décrit.

D'autres particularités et avantages de la présente invention apparaîtront plus clairement à la lecture de la description ci-après, donnée à titre illustratif et non limitatif, et faite en référence aux dessins annexés, sur lesquels :

- La figure 1 représente un exemple de schéma synoptique d'un procédé de géopositionnement par satellites selon l'invention ;
- La figure 2 représente un exemple d'organigramme de fonctionnement d'un filtre de Kalman récepteur selon l'invention.

Par la suite on supposera que chaque satellite de géopositionnement émet des signaux électromagnétiques de géopositionnement sur deux fréquences différentes. On parlera de signaux bi-fréquences et on notera ces deux fréquences, Fa et Fb.

On supposera également qu'il n'y a jamais de décrochage des deux porteuses en même temps, (ou pendant un laps de temps très court), et que le terminal de géopositionnement reçoit au moins un des deux signaux de géopositionnement.

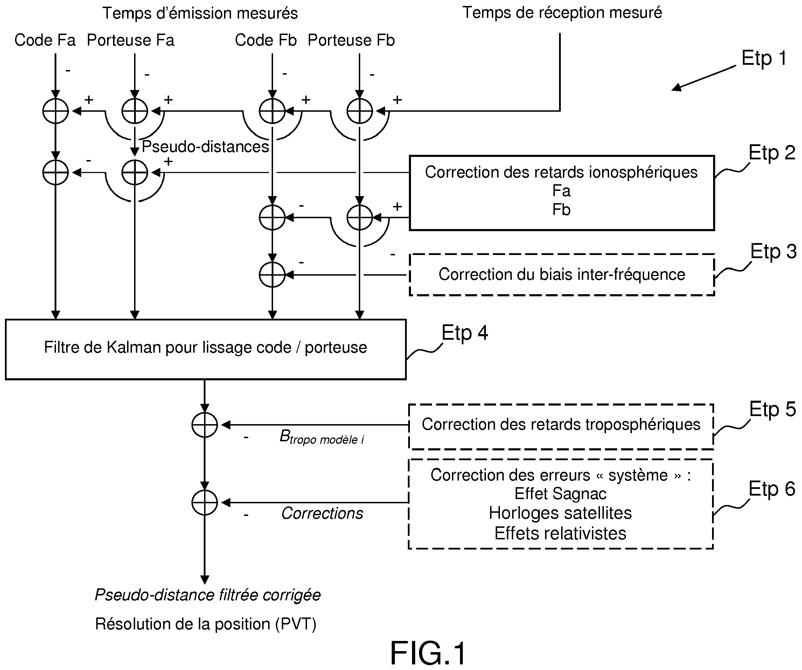

La figure 1 représente un exemple de schéma synoptique, pour chaque axe satellite, d'un procédé de géopositionnement par satellites selon un mode de mise en oeuvre préféré de l'invention.

Ce procédé est mis en oeuvre par un récepteur ou terminal de géopositionnement à partir de signaux électromagnétiques de géopositionnement émis par au moins quatre satellites de géopositionnement. Comme énoncé précédemment, chacun de ces signaux bi-fréquences est formé d'une fréquence porteuse modulée par un code d'étalement.

Le procédé comprend, pour chaque satellite visible, une première étape Etp1 de mesure de pseudo-distances. Pour cela, le terminal de géopositionnement comprend au moins un module de réception configuré pour recevoir ces signaux électromagnétiques provenant de chaque satellite sur deux fréquences différentes.

De façon connu, ce module de réception peut comprendre au moins une antenne, un circuit analogique effectuant des amplifications et changements de fréquence, un convertisseur analogique-numérique et au moins N canaux de traitement numérique. Chaque canal étant affecté à un satellite, l'entier N sera choisi supérieur au nombre de satellites a partir desquels on souhaite recevoir des signaux de géopositionnement.

Chaque canal numérique reçoit un signal numérisé contenant l'ensemble des signaux satellites qu'il soumet à une double boucle d'asservissement permettant d'une part de synchroniser en phase une porteuse localement générée avec la porteuse issue du satellite considéré et d'autre part de synchroniser un code pseudo-aléatoire généré localement avec un code identique présent dans le signal satellite et propre à ce satellite.

Les deux boucles d'asservissement peuvent comprendre chacune deux oscillateurs dont le contenu représente pour le premier oscillateur, la phase instantanée du code pseudo-aléatoire local (aligné sur le code présent dans le signal), qui constitue la mesure de la phase instantanée du code reçu et pour le deuxième oscillateur, la phase instantanée de la porteuse locale (alignée sur la phase de la porteuse présente dans le signal reçu du satellite, au déphasage près introduit par les circuits du récepteur), qui constitue la mesure de la phase instantanée de la porteuse reçue.

La mesure de la phase instantanée du code dans chaque canal est utilisée pour calculer une première donnée numérique appelée pseudo-distance de code $PD_{code}$ représentant une première mesure de la pseudo-distance entre le récepteur et le satellite considéré. Cette mesure est non ambiguë mais assez bruitée.

La mesure de la phase instantanée de la porteuse dans le canal considéré est utilisée pour calculer une deuxième donnée numérique, appelée pseudo-distance de porteuse $PD_{porteuse}$, représentant une deuxième mesure de la pseudo-distance entre le récepteur et le satellite considéré. Cette mesure est peu bruitée mais ambiguë.

Les signaux étant bi-fréquences, en régime nominal, deux pseudo-distances de code et deux pseudo-distances de porteuse peuvent être calculées pour chaque satellite visible du récepteur. On dispose donc, dans chaque canal numérique, de quatre mesures indépendantes ($PD_{code\,a}$, $PD_{code\,b}$, $PD_{porteuse\,a}$, $PD_{porteuse\,b}$) d'une même pseudo-distance séparant le récepteur de chaque satellite visible de ce dernier. Pour chaque satellite, les deux types de mesures de pseudo-distances ($PD_{code}$ et $PD_{porteuse}$) sont obtenus sous forme de durées de propagation de signal entre le satellite considéré et le récepteur le long de l'axe (axe satellite) joignant le satellite considéré et le récepteur.

A l'instant n, les pseudo-distances $PD_{code\,a}(n)$, $PD_{code\,b}(n)$ et $PD_{porteuse\,a}(n)$, $PD_{porteuse\,b}(n)$, mesurées respectivement sur le code et la porteuse à la fréquence Fa et la fréquence Fb, sont données par les formules :

$$PD_{code\,a}(n) = (\ T_{réception}(n) - T_{sat\,a}(n)\ )$$

$$PD_{code\,b}(n) = (\ T_{réception}(n) - T_{sat\,b}(n)\ )$$

$$PD_{porteuse\,a}(n) = (\ T_{réception}(n) - \varphi_{porteuse\,a}(n)\ /\ Fa\ )$$

$$PD_{porteuse\,b}(n) = (\ T_{réception}(n) - \varphi_{porteuse\,b}(n)\ /\ Fb\ )$$

Dans lesquelles :

- $T_{reception}(n)$ représente la date, à l'instant n de prise de mesure, donnée par l'horloge du récepteur,
- $T_{sat\,a}(n)$ représente la date d'émission, par le satellite, du signal reçu à l'instant n par le récepteur, donnée par la phase de code locale,
- $\varphi_{porteuse\,a}(n)$ représente la phase de la porteuse locale, ramenée en fréquence de porteuse (cycles),

Pour chaque satellite visible du récepteur de géopositionnement, le procédé de géopositionnement comprend une étape Etp2 de correction des retards ionosphérique sur chaque pseudo distance calculée en appliquant un modèle de propagation de l'erreur ionosphérique. Pour cela, le terminal comprend également au moins un module de calcul configuré pour traiter les signaux reçus.

Le modèle de propagation de l'erreur ionosphérique peut être un modèle de Kobuchar, un modèle de Nequick ou tout autre modèle équivalent connu de l'homme du métier.

Le modèle de propagation de l'erreur ionosphérique fournit une estimation de l'erreur ionosphérique sur la mesure de pseudo-distance de code d'une fréquence, par exemple la fréquence Fa, en fonction de la position sur terre et de l'heure dans la journée. Cette erreur ionosphérique représente le retard de groupe induit sur la propagation du signal lors de la traversée de l'ionosphère. Ce retard est proportionnel au contenu électronique total de la colonne d'atmosphère traversée par le signal et inversement proportionnel au carré de la fréquence de porteuse. Le retard se retrouve sur la mesure de code. L'effet sur la porteuse est une avance de phase de la même valeur absolue.

Si on considère l'erreur ionosphérique sur la fréquence Fa :

sur la mesure de porteuse Fa, on a une avance de phase de $- B_{iono}$,
sur la mesure de porteuse Fb, on a une avance de phase de $-\gamma.B_{iono}$,
sur la mesure de code Fa, on a un retard de $B_{iono} = \alpha\ .\ CET\ /\ Fa^2$ et
sur la mesure de code Fb, on a un retard de $\gamma.B_{iono} = \alpha\ .\ CET\ /\ Fb^2$ avec $\gamma = Fa^2\ /\ Fb^2$

Donc pour corriger les mesures de code et de phase de porteuse on applique les corrections suivantes :

$$\text{Sur } PD_{\text{code a}}(n) \quad : - B_{\text{iono modèle}}$$

$$\text{Sur } PD_{\text{porteuse a}}(n) \quad : + B_{\text{iono modèle}}$$

$$\text{Sur } PD_{\text{code b}}(n) \quad : - \gamma\, B_{\text{iono modèle}}$$

$$\text{Sur } PD_{\text{porteuse b}}(n) \quad : + \gamma\, B_{\text{iono modèle}}$$

Bien entendu, un raisonnement similaire peut être effectué en considérant un modèle fournissant une estimation de l'erreur ionosphérique sur la fréquence Fb.

Afin de traiter les signaux émis par les satellites de géopositionnement aux deux fréquences Fa et Fb, le module de réception comprend deux voies analogiques distinctes. Lorsque ce module de réception reçoit deux signaux de fréquences différentes, les temps de propagation dans chacune des voies analogiques du module peuvent être différents. Ceci a pour effet d'introduire des différences de retard de groupe entre les deux fréquences Fa et Fb, appelés biais RF.

Lorsque les mesures sont homogènes c'est-à-dire toutes mono-fréquences sur la même fréquence ou toutes bi-fréquences, les biais RF, communs à tous les satellites, n'ont pas d'effet sur la position résolue. Par contre lorsque l'on mélange des mesures mono-fréquences sur des fréquences différentes ou mono-fréquence et bi-fréquences on introduit des distorsions entre les mesures satellite donc une erreur sur la position résolue. Ce cas de figure peut ce produire par exemple lorsqu'un des deux signaux bi-fréquences n'est pas reçus par le terminal de géopositionnement par exemple suite à des problèmes de scintillation ionosphérique.

Afin d'éviter cela, pour chaque satellite visible, le procédé peut comprendre une étape Etp3 de compensation d'un biais inter-fréquences entre les signaux bi-fréquences.

Au cours de cette étape, le module de calcul identifie l'écart de biais RF entre les deux fréquences sur les mesures de signaux bi-fréquences et corrige cet écart sur tous les satellites en compensant l'écart entre les deux fréquences uniquement sur les mesures de code et seulement sur une des deux fréquences. L'identification du biais RF et sa correction peut être mis en oeuvre en utilisant les techniques connues de l'homme du métier notamment celle développé dans la demande de brevet FR 2 943 868. L'écart de biais RF peut être estimé en faisant la moyenne de toutes les mesures de signaux bi-fréquences disponibles depuis le début (moyenne dans le temps et sur les satellites) et en considérant que les bais RF sont constants dans le temps.

Les mesures de code bi-fréquences de chaque satellite sont ensuite lissées par les mesures de porteuse bi-fréquences au cours une étape Etp4 de lissage des pseudo-distances compensées à l'aide d'un filtre de Kalman. Au cours de cette étape, le filtre de Kalman effectue simultanément le lissage code porteuse et la correction du résidu d'erreur ionosphérique.

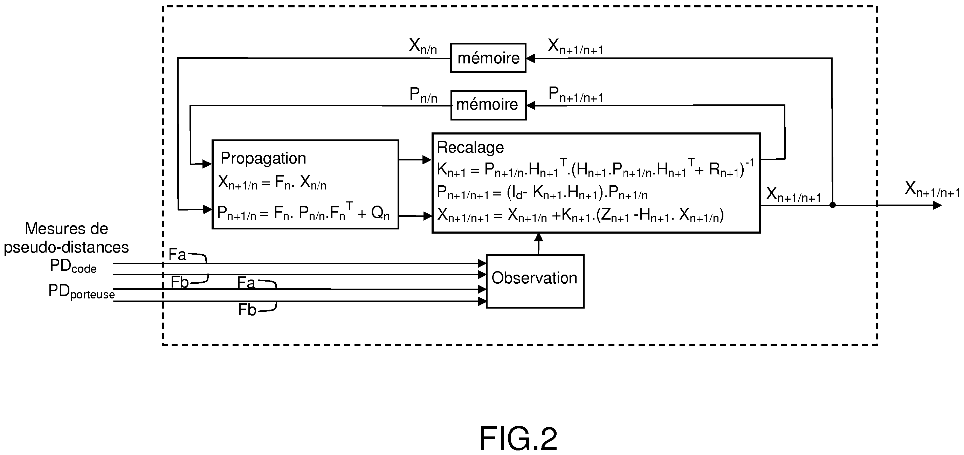

En référence à la figure 2, on rappelle le principe de fonctionnement du filtrage de Kalman.

Le filtrage de Kalman utilise un modèle d'état, établi sur la base de la connaissance (avérée ou supposée) du comportement des grandeurs physiques inconnues que l'on cherche à déterminer et aux mesures disponibles.

Ce modèle d'état est constitué :

- d'un vecteur d'état $X_n$ représentant les grandeurs physiques modélisées à l'instant $t_n$, comportant un nombre de composantes $N_{\text{état}}$.
- d'un modèle de propagation, de la forme :

$$X_{n+1} = F_n \cdot X_n + V_n$$

Dans lequel :

$X_{n+1}$ est le vecteur d'état à l'instant $t_{n+1}$

$F_n$ est la matrice de propagation sur l'intervalle $[t_n, t_{n+1}]$, de dimension $N_{\text{état}} \times N_{\text{état}}$ (dans laquelle l'opérateur "x" représente le signe multiplié).

$V_n$ est le vecteur bruit de propagation sur l'intervalle $[t_n, t_{n+1}]$, blanc, gaussien, de moyenne nulle, de matrice

de covariance $Q_n = E[V_n^T \cdot V_n]$ (où $V_n^T$ est le vecteur transposé de $V_n$) et de dimension $N_{état}$.

- d'un modèle d'observation, de la forme :

$$Z_n = H_n \cdot X_n + W_n$$

Dans lequel :

$Z_n$ est le vecteur d'observation à l'instant $t_n$, de dimension $N_{obs}$

$H_n$ est la matrice d'observation à l'instant $t_n$, de dimension $N_{obs} \times N_{état}$

$W_n$ est le vecteur bruit de mesure à l'instant $t_n$, blanc, gaussien, de moyenne nulle, de matrice de covariance $R_n = E[W_n^T \cdot W_n]$ (où $W_n^T$ est le vecteur transposé de $W_n$) et de dimension $N_{obs}$.

Dans ce modèle d'état, le vecteur d'état $X_n$ est de valeur a priori inconnue. Il n'est pas directement accessible par la mesure, contrairement au vecteur d'observations $Z_n$, mais seulement par l'intermédiaire du modèle d'observation.

Le filtre de Kalman réalise l'estimation du vecteur d'état par un calcul de propagation, à partir du modèle de propagation, et par un calcul de recalage, à partir des observation et du modèle d'observation.

Pour cela le filtre utilise deux variables :

- le vecteur d'état estimé, noté $X_{n/n}$ après recalage à l'instant $t_n$, noté $X_{n+1/n}$ après propagation entre les instants $t_n$ et $t_{n+1}$, et noté $X_{n+1/n+1}$ après recalage à l'instant $t_{n+1}$, de dimension $N_{état}$.
- la matrice de covariance de l'état estimé, notée $P_{n/n}$ après le recalage à l'instant $t_n$, notée $P_{n+1/n}$ après la propagation entre les instants $t_n$ et $t_{n+1}$, et noté $P_{n+1/n+1}$ après recalage à l'instant $t_{n+1}$, de dimension $N_{état} \times N_{état}$

Pour réaliser le calcul de propagation, le filtre utilise les formules :

- Pour le vecteur d'état estimé :

$$X_{n+1/n} = F_n \cdot X_{n/n}$$

La matrice de propagation $F_n$ servant à établir une relation linéaire entre le vecteur d'état avant propagation et après propagation.

- Pour la matrice de covariance :

$$P_{n+1/n} = F_n \cdot P_{n/n} \cdot F_n^T + Q_n$$

(dans laquelle $F_n^T$ représente la matrice transposée de $F_n$)

Dans cette formule, les coefficients de la matrice de covariance $P_n$ représentent la variance de chacune des composantes du vecteur d'état estimé (termes diagonaux) et la covariance des différentes paires de composantes de ce vecteur (termes non diagonaux). Cette matrice $P_n$ représente le degré de confiance qu'on attribue au vecteur d'état estimé.

La matrice de covariance $Q_n$ du bruit de propagation permet de quantifier la part aléatoire et les approximations faites dans le modèle de propagation pour chaque composante du vecteur d'état $X_{n/n}$.

Pour réaliser le calcul de recalage, le filtre utilise les formules :

- Pour le gain de recalage :

$$K_{n+1} = P_{n+1/n} \cdot H_{n+1}^T \cdot ( H_{n+1} \cdot P_{n+1/n} \cdot H_{n+1}^T + R_{n+1} )^{-1}$$

(où $H_{n+1}^T$ est la matrice transposée de $H_{n+1}$)

La matrice d'observations $H_n$ sert à établir une relation linéaire entre le vecteur d'état et les mesures

La matrice de covariance $R_n$ caractérise le bruit propre des mesures. $R_n$ est une matrice carrée de dimension $N_{obs}$ x $N_{obs}$.

- Pour le vecteur d'état estimé :

$$X_{n+1/n+1} = X_{n+1/n} + K_{n+1} \cdot ( Z_{n+1} - H_{n+1} \cdot X_{n+1/n} )$$

- Pour la matrice de covariance :

$$P_{n+1/n+1} = ( Id_{N\acute{e}tat} - K_{n+1} \cdot H_{n+1} ) \cdot P_{n+1/n}$$

(dans laquelle Id $N_{\acute{e}tat}$ représente la matrice identité de dimension $N_{\acute{e}tat} \cdot N_{\acute{e}tat}$)

Au départ, le vecteur d'état $X_0$ est initialisé à zéro et la matrice $P_0$ est initialisée avec les variances et covariances représentatives de l'incertitude sur les grandeurs physique modélisées dans le vecteur d'état.

Le calcul de propagation fait intervenir les matrices $F_n$ et $Q_n$ pour déterminer le vecteur d'état estimé propagé $X_{n+1/n}$ à partir du vecteur d'état estimé recalé $X_{n/n}$ et la matrice de covariance propagée $P_{n+1/n}$ à partir de la matrice de covariance recalée $P_{n/n}$.

Le calcul de recalage fait intervenir les observations $Z_{n+1}$ issues des mesures et les matrices $H_{n+1}$ et $R_{n+1}$, pour déterminer le vecteur d'état estimé recalé $X_{n+1/n+1}$ à partir du vecteur d'état estimé propagé $X_{n+1/n}$ et la matrice de covariance recalée $P_{n+1/n+1}$ à partir de la matrice de covariance propagé $P_{n/n}$.

L'indice n est ensuite incrémenté de 1 (soit n = n+1) et la propagation, puis le recalage sont réitérés. On enchaine ainsi une alternance de propogation, recalage et incrémentation de l'indice.

Sur la figure 2, on a représenté une mémoire recueillant $X_{n+1/n+1}$ et fournissant $X_{n/n}$ pour indiquer que la valeur de vecteur d'état introduite dans le modèle de propagation pour le calcul de $X_{n+1/n}$ daté de l'instant $t_{n+1}$ est la valeur de vecteur d'état $X_{n/n}$ qui a été calculée à l'instant précédent $t_n$. De même, on a représenté une mémoire pour la matrice de covariance $P_{n/n}$ et pour la position estimée $G_{n/n}$.

Dans le filtre de lissage code porteuse selon le mode de mise en oeuvre préféré de l'invention le vecteur d'état X et le modèle d'évolution, représenté par les matrices F et Q, sont les suivants :

$$X = \begin{bmatrix} PD \\ B_{iono} \\ \delta_a \\ \delta_b \\ B_{RF} \end{bmatrix} \quad F = \begin{bmatrix} 1 & 0 & 0 & 0 & 0 \\ 0 & \lambda_{iono} & 0 & 0 & 0 \\ 0 & 0 & 1 & 0 & 0 \\ 0 & 0 & 0 & 1 & 0 \\ 0 & 0 & 0 & 0 & 1 \end{bmatrix} \quad Q = \begin{bmatrix} q_{PD} & 0 & 0 & 0 & 0 \\ 0 & q_{iono} & 0 & 0 & 0 \\ 0 & 0 & q_a & 0 & 0 \\ 0 & 0 & 0 & q_b & 0 \\ 0 & 0 & 0 & 0 & 0 \end{bmatrix}$$

Dans lesquels :

- PD représente la pseudo-distance sans bruit de mesure récepteur (bruit thermique, interférence, multi-trajets) et sans erreur ionosphérique ; PD = distance satellite récepteur + biais horloge récepteur x c + erreur troposphérique + biais satellite

- $B_{iono}$ représente l'erreur ionosphérique sur une fréquence (par exemple sur la fréquence Fa) après correction par le modèle (résidu) ;

- $\delta_a$ représente l'ambiguïté flottante de la mesure de phase de porteuse sur la fréquence Fa ;

- $\delta_b$ représente l'ambiguïté flottante de la mesure de phase de porteuse sur la fréquence Fb ;

- $B_{RF}$ représente le biais inter-fréquences de la voie analogique de la fréquence Fb par apport à la voie analogique de la fréquence Fa ;

- $\lambda_{iono}$ représente le facteur d'atténuation du modèle de Markov de l'erreur ionosphérique.

$$\lambda_{iono} = 1 - \Delta T/\tau$$

- $\Delta T$ représentant la période de recalage du filtre et $\tau$ la constante de temps du modèle de Markov (du 1[ier] ordre) de l'erreur ionosphérique après correction par le modèle. On prendra $\Delta T = 1s$ et $\tau = 2000$ s

- $q_{PD}$ représente le bruit d'état sur la pseudo-distance vrai. On choisira une valeur très grande pour cette composante car on ne possède pas de modèle d'évolution fiable. On prendra par exemple $q_{PD} = (1000 \text{ m})^2$ ;

- $q_{iono}$ représente le bruit d'état du modèle de Markov (du 1[ier] ordre) de l'erreur ionosphérique après correction par le modèle ;

$$q_{iono} = \sigma_{iono}^2 . 2 . \Delta T/\tau$$

$\sigma_{iono}$ représentant l'écart-type de l'erreur ionosphérique après correction par le modèle. On prendra $\sigma_{iono} = (20 \text{ m})^2$

- $q_a$ représente le bruit d'état de l'ambiguïté de la mesure de phase de porteuse sur la fréquence Fa. On prendra $q_a = (10^{-2} \text{ m})^2$

- $q_b$ représente le bruit d'état de l'ambiguïté de la mesure de phase de porteuse sur la fréquence Fb. On prendra $q_b = (10^{-2} \text{ m})^2$

Suivant un mode mise en oeuvre alternatif, le vecteur d'état peut comprendre quatre états. Dans ce cas, les matrices F et Q du modèle d'évolution sont également de dimension quatre. Le vecteur d'état X et le modèle d'évolution deviennent :

$$X = \begin{bmatrix} PD \\ B_{iono} \\ \delta_a \\ \delta_b \end{bmatrix} \quad F = \begin{bmatrix} 1 & 0 & 0 & 0 & 0 \\ 0 & \lambda_{iono} & 0 & 0 & 0 \\ 0 & 0 & 1 & 0 & 0 \\ 0 & 0 & 0 & 1 & 0 \end{bmatrix} \quad Q = \begin{bmatrix} q_{PD} & 0 & 0 & 0 & 0 \\ 0 & q_{iono} & 0 & 0 & 0 \\ 0 & 0 & q_a & 0 & 0 \\ 0 & 0 & 0 & q_b & 0 \end{bmatrix}$$

En l'absence de saut de cycle de la boucle de phase de porteuse le bruit d'état sur les ambiguïtés est nul. Pour tenir compte du risque de saut de cycle (modèle non linéaire et non gaussien) on limite la constante de temps du filtre de lissage, qui tend naturellement vers l'infini. En effet, si la constante de temps est trop grande l'effet du saut de cycle sur la pseudo-distance filtrée dure longtemps, le temps que le filtre converge et se recale sur la mesure de code (sans saut). En cas de saut de cycle à répétition, à faible rapport signal à bruit, les sauts vont se cumuler avant que le filtre n'ait le temps de converger sur la mesure de code, ce qui peut introduire une erreur de mesure inacceptable. A titre d'exemple, cinq sauts de cycle donnent 1 mètre d'erreur.

Pour limiter la constante de temps on utilise une valeur de bruit d'état non nulle.

Les matrices représentatives des mesures et du modèle d'observation s'écrivent :

$$Z_n = \begin{bmatrix} PD_{code\,a}(n) \\ PD_{porteuse\,a}(n) \\ PD_{code\,b}(n) \\ PD_{porteuse\,b}(n) \end{bmatrix} \quad R = \begin{bmatrix} \sigma^2_{code\,a} & 0 & 0 & 0 \\ 0 & \sigma^2_{porteuse\,a} & 0 & 0 \\ 0 & 0 & \sigma^2_{code\,b} & 0 \\ 0 & 0 & 0 & \sigma^2_{porteuse\,b} \end{bmatrix}$$

$$H = \begin{bmatrix} 1 & +1 & 0 & 0 & 0 \\ 1 & -1 & 1 & 0 & 0 \\ 1 & +\gamma & 0 & 0 & 1 \\ 1 & -\gamma & 0 & 1 & 1 \end{bmatrix}$$

Dans lesquelles :

- $PD_{code\ a}(n)$ représente la pseudo-distance mesurée sur le code de la fréquence Fa, à l'instant $t(n) = n.\Delta T$

- $PD_{porteuse\ a}(n)$ représente la pseudo -distance mesurée sur le code de la fréquence Fa , à l'instant $t(n) = n.\Delta T$

- $PD_{code\ b}(n)$ représente la pseudo-distance mesurée sur le code de la fréquence Fb, à l'instant $t(n) = n.\Delta T$

- $PD_{porteuse\ b}(n)$ représente la pseudo-distance mesurée sur le code de la fréquence Fb , à l'instant $t(n) = n.\Delta T$

- $\sigma_{code\ a}$ et $\sigma_{code\ b}$ représentent respectivement l'écart-type de l'erreur de mesure de la phase de code propre au récepteur pour les fréquences a et b.

- $\sigma_{porteuse\ a}$ et $\sigma_{porteuse\ b}$ représentent respectivement l'écart-type de l'erreur de mesure de la phase de porteuse propre au récepteur pour les fréquences a et b.

Lors de l'initialisation, le vecteur d'état X et la matrice de covariance P ont pour valeur :

$$X_{0/0} = \begin{bmatrix} 0 \\ 0 \\ 0 \\ 0 \\ 0 \end{bmatrix} \qquad P_{0/0} = \begin{bmatrix} 1000^2 & 0 & 0 & 0 & 0 \\ 0 & \sigma_{iono}^{\ 2} & 0 & 0 & 0 \\ 0 & 0 & 1000^2 & 0 & 0 \\ 0 & 0 & 0 & 1000^2 & 0 \\ 0 & 0 & 0 & 0 & \sigma_{RF}^{\ 2} \end{bmatrix}$$

$\sigma_{iono}$ représente l'écart-type de l'erreur ionosphérique sur l'axe à vue du satellite considère. Sa valeur est donnée par des modèles de l'atmosphère, en fonction de l'inclinaison de l'axe satellite, de la latitude du récepteur, et de l'heure du jour. On prend $\sigma_{iono}$ = 30 m.

$\sigma_{iono}$ représente l'écart-type de l'erreur sur le biais interfréquence sur l'axe à vue du satellite considéré. On prend $\sigma_{RF}$ = 3 m.

Lorsqu'un satellite décroche sur une fréquence, c'est-à-dire qu'un des deux signaux bi-fréquences émis par un satellite de géopositionnement n'est pas reçu par le terminal ou est reçu avec une amplitude trop faible, le modèle d'observation est modifié. Les deux lignes correspondant à ces mesures dans les matrices Z, R et H sont supprimées.

Si par exemple, sur un axe satellite, les mesures sur la fréquence Fb deviennent indisponibles et seules les mesures sur la fréquence Fa sont disponible, les matrices représentatives du modèle d'observation deviennent :

$$Z_n = \begin{bmatrix} PD_{code\ a}(n) \\ PD_{porteuse\ a}(n) \end{bmatrix} \qquad R = \begin{bmatrix} \sigma^2_{code\ a} & 0 \\ 0 & \sigma^2_{porteuse\ a} \end{bmatrix} \qquad H = \begin{bmatrix} 1 & +1 & 0 & 0 & 0 \\ 1 & -1 & 1 & 0 & 0 \end{bmatrix}$$

De façon analogue, lorsque les mesures sur la fréquence Fa deviennent indisponibles le modèle d'observation s'écrit :

$$Z_n = \begin{bmatrix} PD_{code\ b}(n) \\ PD_{porteuse\ b}(n) \end{bmatrix} \qquad R = \begin{bmatrix} \sigma^2_{code\ b} & 0 \\ 0 & \sigma^2_{porteuse\ b} \end{bmatrix} \qquad H = \begin{bmatrix} 1 & +\gamma & 0 & 0 & 1 \\ 1 & -\gamma & 1 & 0 & 1 \end{bmatrix}$$

Lorsque les mesures redeviennent disponibles, les deux lignes associées à ces mesures dans les matrices Z, R et H sont rétablies. De plus, pour la fréquence réapparue, l'estimation de l'ambigüité de la mesure de phase du vecteur d'état X est réinitialisée à 0 avant le recalage sur les 4 mesures. Le coefficient diagonal (variance) associé à l'ambigüité de phase de porteuse dans la matrice P est réinitialisé à une valeur très grande devant les ordres de grandeur couramment utilisés. Cette valeur est augmentée de façon artificielle pour indiquer au filtre que l'estimation de l'ambigüité n'est plus bonne, et qu'il faut donc la réinitialiser. Cette variance peut être fixée à une valeur de $1000^2$.

Lorsque les mesures sur la fréquence Fa redeviennent disponibles, le vecteur d'état X et la matrice de covariance P s'écrivent :

$$X_{n+1/n} = \begin{bmatrix} PD_{n+1/n} \\ B_{iono\ n+1/n} \\ 0 \\ \delta_{b\ n+1/n} \\ B_{RF} \end{bmatrix} \qquad P_{n+1/n} = P_{n+1/n} + \begin{bmatrix} 0 & 0 & 0 & 0 & 0 \\ 0 & 0 & 0 & 0 & 0 \\ 0 & 0 & 1000^2 & 0 & 0 \\ 0 & 0 & 0 & 0 & 0 \\ 0 & 0 & 0 & 0 & 0 \end{bmatrix}$$

De façon analogue, lorsque les mesures sur la fréquence Fb redeviennent disponibles on obtient :

$$X_{n+1/n} = \begin{bmatrix} PD_{n+1/n} \\ B_{iono\ n+1/n} \\ \delta_{a\ n+1/n} \\ 0 \\ B_{RF} \end{bmatrix} \qquad P_{n+1/n} = P_{n+1/n} + \begin{bmatrix} 0 & 0 & 0 & 0 & 0 \\ 0 & 0 & 0 & 0 & 0 \\ 0 & 0 & 0 & 0 & 0 \\ 0 & 0 & 0 & 1000^2 & 0 \\ 0 & 0 & 0 & 0 & 0 \end{bmatrix}$$

Lorsque l'on observe une discontinuité sur la mesure de phase de porteuse de l'une des deux fréquences, le vecteur d'état et la matrice de covariance, sont réinitialisés de la même manière avant le recalage sur la nouvelle mesure de phase de porteuse.

Le Filtre de Kalman permet d'effectuer à la fois le lissage code porteuse et la combinaison « iono-free ». En sortie du lissage code porteuse, la donné utile est la pseudo-distance PD filtrée et corrigée de l'erreur ionosphérique, correspondant à la première coordonnée du vecteur d'état estimé après recalage $X_{n+1/n+1}$.

De façon avantageuse, du fait que l'on applique les corrections du modèle en amont du filtre de Kalman, celui-ci n'a plus qu'à identifier le résidu de l'erreur ionosphérique. L'erreur calculée grâce au modèle obéit au même modèle de Markov que l'erreur ionosphérique, donc à fortiori la différence aussi, avec une amplitude plus petite. La correction étant elle même proportionnelle à l'inverse du carré de la fréquence, l'erreur résiduelle l'est aussi, donc le modèle d'observation liant l'état du filtre aux mesures bi-fréquence reste inchangé.

Les modèles de Kobuchar ou de Nequick sont des modèles de prévision de l'erreur ionosphérique qui normalement sont utilisés pour corriger des mesures mono fréquence. Dans le cas de mesures bi-fréquences, le fait de faire la combinaison « iono-free » de signaux sur deux fréquences différentes, permet normalement d'éliminer l'erreur ionosphérique. Dans le procédé selon l'invention, ce modèle est utile lorsque l'une des deux fréquences n'est plus disponible et que la mesure se retrouve mono-fréquence..

Lorsqu'une des deux fréquences n'est plus disponible sur une longue période, par exemple suite à un brouillage ou une amplitude trop faible, on passe d'un fonctionnement bi-fréquence à un fonctionnement mono-fréquence. Dans un premier temps le filtre va fonctionner naturellement sur l'acquis du fonctionnement bi-fréquences avec le biais ionosphérique estimé lors de la présence des signaux bi-fréquences et petit à petit cette estimation du biais va se périmer parce que ce biais a changé. Le fait d'appliquer une correction de l'erreur ionosphérique en amont du filtre de Kalman, fait que le procédé va passer progressivement d'une combinaison « iono free » sur deux fréquences à un fonctionnement équivalent à un cas mono-fréquence mais corrigé grâce au modèle de prévision de l'erreur ionosphérique.

Une étape Etp5 de correction des retards troposphériques peut ensuite être appliquée sur la mesure de pseudo-distance en sortie du filtre de Kalman pour chaque satellite. Cette compensation est obtenue en appliquant un modèle classique dépendant entre autre de l'heure de la journée, de la position géographique du satellite considéré.

Une étape Etp6 de correction des erreurs « système » peut ensuite être appliquée pour chaque axe satellite. Ces erreurs sont liées au principe du GNSS. Il s'agit par exemple de l'Effet Sagnac du au décalage temporel de la réception de deux signaux tournant en sens inverse. Parmi ces erreurs, on trouve également l'imprécision des horloges atomiques. Lors de cette étape l'effet relativiste est également corrigé. Ces corrections à effectuer sont données par le satellite considéré à travers un message « navigation » contenant les termes correctifs. Ces termes correctifs sont communs aux quatre mesures issues d'un même satellite.

Une fois ces corrections effectuées, le module de calcul estime la position du terminal de géopositionnement en combinant les pseudo-distances filtrées et corrigées calculées pour chaque satellite visible du terminal à l'aide de l'algorithme de résolution, PVT pour « *Position, Velocity and Time* » selon la terminologie anglosaxonne. Comme énoncé précédemment, au moins quatre pseudo-distances sont nécessaires.

Suivant un mode de mise en oeuvre alternatif, les étapes de correction des retards troposphériques Etp5 et des erreurs "système" Etp6 peuvent être réalisées en amont du filtrage de Kalman à condition d'appliquer ces corrections aux quatre mesures de pseudo distance.

Le module de calcul peut comprendre un ou plusieurs microprocesseurs, processeurs, ordinateurs ou tous autres moyens équivalents programmés de façon opportune.

## Revendications

1. Procédé de géopositionnement par satellites mis en oeuvre par un terminal de géopositionnement à partir d'au moins quatre satellites émettant chacun des signaux électromagnétiques de géopositionnement, dit bi-fréquences, sur deux fréquences différentes, chacun desdits signaux étant formés d'une fréquence porteuse modulée par un code d'étalement, ledit terminal comprenant au moins un module de réception configuré pour recevoir les signaux électromagnétiques provenant de chaque satellite sur deux fréquences différentes et au moins un module de calcul configuré pour traiter lesdits signaux, ledit procédé comprenant, pour chaque satellite de géopositionnement,

   - une étape de calcul (Etp1), en régime nominal, de quatre pseudo-distances à partir des deux codes et des deux porteuses des signaux de géopositionnement bi-fréquences reçus,
   - une étape de correction (Etp2) des retards ionosphériques sur chaque pseudo-distance calculée en appliquant un modèle de propagation de l'erreur ionosphérique,

   et étant **caractérisé en ce qu'**il comprend :

   - une étape (Etp4) de lissage code porteuse à l'aide d'un filtre de Kalman dont le vecteur de mesure comprend les quatre pseudo-distances corrigées afin de fournir une seule mesure de pseudo-distance sans bruit de mesure et de corriger le résidu d'erreur ionosphérique,

   la position du terminal de géopositionnement étant estimée en utilisant les pseudo-distances corrigées calculées pour chaque satellite.

2. Procédé selon la revendication précédente dans lequel ledit procédé comprend une étape (Etp5) de correction des retards troposphériques.

3. Procédé selon une des revendications précédentes dans lequel ledit procédé comprend une étape (Etp6) de correction des erreurs système.

4. Procédé selon une des revendications précédentes dans lequel ledit procédé comprend une étape de compensation (Etp3) d'un biais inter-fréquences entre les signaux bi-fréquences, en amont de l'étape (Etp4) de lissage code porteuse.

5. Procédé selon une des revendications précédentes dans lequel le filtre de Kalman est configuré pour propager un vecteur d'état comprenant la valeur de la pseudo-distance (PD) sans bruit de mesure, la valeur de l'erreur ionosphérique ($B_{iono}$) sur une fréquence après correction par le modèle de propagation de l'erreur ionosphérique et les valeurs des l'ambiguïtés flottantes ($\delta_a$, $\delta_b$) des mesures de phase de porteuse sur chacune des deux fréquences.

6. Procédé selon une des revendications précédentes dans lequel le filtre de Kalman est configuré pour propager un vecteur d'état comprenant en outre la valeur du biais inter-fréquences ($B_{RF}$) entre les signaux bi-fréquences.

7. Procédé selon une des revendications précédentes dans lequel le modèle de propagation de l'erreur ionosphérique est un modèle de Klobuchar.

**8.** Procédé selon une des revendications 1 à 6 dans lequel le modèle de propagation de l'erreur ionosphérique est un modèle de Nequick.

**9.** Procédé selon une des revendications précédentes dans lequel ledit procédé comprend une étape de mémorisation de l'erreur ionosphérique.

**10.** Terminal de géopositionnement **caractérisé en ce qu'**il comprend au moins un module de réception configuré pour recevoir des signaux électromagnétiques de géopositionnement, dit bi-fréquences, émis par au moins quatre satellites sur deux fréquences différentes et au moins un module de calcul configuré pour traiter lesdits signaux de géopositionnement et mettre en oeuvre le procédé de géopositionnement selon l'une des revendications précédentes.

**Patentansprüche**

**1.** Satellitenbasiertes Geopositionierungsverfahren, durchgeführt von einem Geopositionierungsterminal auf der Basis von wenigstens vier Satelliten, die jeweils elektromagnetische Geopositionierungssignale, Doppelfrequenzsignale genannt, auf zwei unterschiedlichen Frequenzen aussenden, wobei jedes der Signale von einer durch einen Spreizcode modulierten Trägerfrequenz gebildet wird, wobei das Terminal wenigstens ein Empfangsmodul, konfiguriert zum Empfangen der von jedem Satelliten kommenden elektromagnetischen Signale auf zwei unterschiedlichen Frequenzen, und wenigstens ein Rechenmodul umfasst, konfiguriert zum Verarbeiten der Signale, wobei das Verfahren für jeden Geopositionierungssatelliten Folgendes beinhaltet:

- einen Rechenschritt (Etpl), im Nennbetrieb, von vier Pseudodistanzen auf der Basis von zwei Codes und von zwei Trägern von empfangenen Doppelfrequenz-Geopositionierungssignalen,
- einen Schritt (Etp2) des Korrigierens von ionosphärischen Verzögerungen auf jeder berechneten Pseudodistanz unter Anwendung eines Ausbreitungsmodells des ionosphärischen Fehlers,

und **dadurch gekennzeichnet, dass** es Folgendes beinhaltet:

- einen Schritt (Etp4) des Trägercode-Glättens mittels eines Kalman-Filters, dessen Messvektor die vier korrigierten Pseudodistanzen umfasst, um einen einzigen Pseudodistanzmesswert ohne Messrauschen zu liefern und den ionosphärischen Restfehler zu korrigieren,

wobei die Position des Geopositionierungsterminals anhand der für jeden Satelliten berechneten korrigierten Pseudodistanzen geschätzt wird.

**2.** Verfahren nach dem vorherigen Anspruch, wobei das Verfahren einen Schritt (Etp5) des Korrigierens von troposphärischen Verzögerungen beinhaltet.

**3.** Verfahren nach einem der vorherigen Ansprüche, wobei das Verfahren einen Schritt (Etp6) des Korrigierens von Systemfehlern umfasst.

**4.** Verfahren nach einem der vorherigen Ansprüche, wobei das Verfahren einen Schritt (Etp3) des Kompensierens eines Inter-Frequenz-Bias zwischen den Doppelfrequenzsignalen oberhalb des Trägercode-Glättungsschritts (Etp4) beinhaltet.

**5.** Verfahren nach einem der vorherigen Ansprüche, bei dem das Kalman-Filter zum Ausbreiten eines Zustandsvektors konfiguriert ist, der den Wert der Pseudodistanz (PD) ohne Messrauschen, den Wert des ionosphärischen Fehlers ($B_{iono}$) auf einer Frequenz nach der Korrektur durch das Ausbreitungsmodell des ionosphärischen Fehlers und die Werte der schwebenden Ambiguitäten ($\delta_a$, $\delta_b$) von Trägerphasenmessungen auf jeder der beiden Frequenzen umfasst.

**6.** Verfahren nach einem der vorherigen Ansprüche, bei dem das Kalmanfilter zum Ausbreiten eines Zustandsvektors konfiguriert ist, ferner umfassend den Wert des Inter-Frequenz-Bias ($B_{RF}$) zwischen den Doppelfrequenzsignalen.

**7.** Verfahren nach einem der vorherigen Ansprüche, bei dem das Ausbreitungsmodell des ionosphärischen Fehlers ein Klobuchar-Modell ist.

8. Verfahren nach einem der Ansprüche 1 bis 6, bei dem das Ausbreitungsmodell des ionosphärischen Fehlers ein Nequick-Modell ist.

9. Verfahren nach einem der vorherigen Ansprüche, bei dem das Verfahren einen Schritt des Speicherns des ionosphärischen Fehlers beinhaltet.

10. Geopositionierungsterminal, **dadurch gekennzeichnet, dass** es wenigstens ein Empfangsmodell, konfiguriert zum Empfangen von elektromagnetischen Geopositionierungssignalen, Doppelfrequenzsignale genannt, ausgesendet von wenigstens vier Satelliten auf zwei unterschiedlichen Frequenzen, und wenigstens ein Rechenmodell umfasst, konfiguriert zum Verarbeiten der Geopositionierungssignale und zum Durchführen des Geopositionierungsverfahrens nach einem der vorherigen Ansprüche.

**Claims**

1. A satellite geopositioning method implemented by a geopositioning terminal from at least four satellites each transmitting electromagnetic geopositioning signals, called dual-frequency signals, on two different frequencies, each of said signals being formed by a carrier frequency modulated by a spreading code, said terminal comprising at least one reception module configured to receive the electromagnetic signals originating from each satellite on two different frequencies and at least one computation module configured to process said signals, said method comprising, for each geopositioning satellite:

   - a step (Etp1) of computing, in nominal operation, four pseudo-distances from the two codes and the two carriers of the received dual-frequency geopositioning signals;
   - a step (Etp2) of correcting ionospheric delays over each computed pseudo-distance by applying an ionospheric error propagation model;

   and being **characterised in that** it comprises:

   - a step (Etp4) of carrier code smoothing using a Kalman filter, the measurement vector of which comprises the four corrected pseudo-distances in order to provide a single pseudo-distance measurement without measurement noise and to correct the residual ionospheric error;

   the position of the geopositioning terminal being estimated using the corrected pseudo-distances computed for each satellite.

2. The method as claimed in the preceding claim, wherein said method comprises a step (Etp5) of correcting tropospheric delays.

3. The method as claimed in any one of the preceding claims, wherein said method comprises a step (Etp6) of correcting system errors.

4. The method as claimed in any one of the preceding claims, wherein said method comprises a step (Etp3) of compensating for an inter-frequency bias between the dual-frequency signals, upstream of the step (Etp4) of carrier code smoothing.

5. The method as claimed in any one of the preceding claims, wherein the Kalman filter is configured to propagate a state vector comprising the value of the pseudo-distance (PD) without measurement noise, the value of the ionospheric error ($B_{iono}$) on a frequency after correction by the ionospheric error propagation model and the values of the floating ambiguities ($\delta_a$, $\delta_b$) of the carrier phase measurements on each of the two frequencies.

6. The method as claimed in any one of the preceding claims, wherein the Kalman filter is configured to propagate a state vector further comprising the value of the inter-frequency bias ($B_{RF}$) between the dual-frequency signals.

7. The method as claimed in any one of the preceding claims, wherein the ionospheric error propagation model is a Klobuchar model.

8. The method as claimed in any one of claims 1 to 6, wherein the ionospheric error propagation model is a Nequick model.

9. The method as claimed in any one of the preceding claims, wherein said method comprises a step of storing the ionospheric error.

10. A geopositioning terminal, **characterised in that** it comprises at least one reception module configured to receive electromagnetic geopositioning signals, called dual-frequency signals, transmitted by at least four satellites on two different frequencies and at least one computation module configured to process said geopositioning signals and to implement the geopositioning method as claimed in any one of the preceding claims.

Temps d'émission mesurés          Temps de réception mesuré

Code Fa  Porteuse Fa      Code Fb  Porteuse Fb

Etp 1

Pseudo-distances

Etp 2
Correction des retards ionosphériques
Fa
Fb

Etp 3
Correction du biais inter-fréquence

Etp 4
Filtre de Kalman pour lissage code / porteuse

Etp 5
Correction des retards troposphériques
$-$  $B_{tropo\ modèle\ i}$

Etp 6
Correction des erreurs « système » :
Effet Sagnac
Horloges satellites
Effets relativistes
$-$  Corrections

Pseudo-distance filtrée corrigée

Résolution de la position (PVT)

FIG.1

FIG.2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2943868

**Littérature non-brevet citée dans la description**

- RAIM with Kalman Code Carrier Smoothing. *GNSS 2012, PROCEEDINGS OF THE 25TH INTERNATIONAL TECHNICAL MEETING OF THE SATELLITE DIVISION OF THE INSTITUTE OF NAVIGATION (ION GNSS 2012),* 2012, 2265-2269